# EUROPEAN PATENT SPECIFICATION

(11) **EP 2 324 630 B1**
(45) Date of publication and mention of the grant of the patent: **15.07.2015**
(21) Application number: 09811657.7
(22) Date of filing: 28.08.2009
(51) Int. Cl.: H04N 7/167, H04N 21/4627, H04N 21/254, H04N 21/81, H04N 21/458, G06F 21/00

(54) **METHOD AND APPARATUS FOR MANAGING DIGITAL RIGHTS MANAGEMENT MODULE**
VERFAHREN UND VORRICHTUNG FÜR EIN MODUL ZUR VERWALTUNG DIGITALER RECHTE
PROCÉDÉ ET APPAREIL DE GESTION D'UN MODULE DE GESTION DE DROITS NUMÉRIQUES

(30) Priority: 05.09.2008 KR 20080087694
(43) Date of publication of application: 25.05.2011
(73) Proprietor: Samsung Electronics Co., Ltd., Suwon-si, Gyeonggi-do, 443-742 (KR)
(72) Inventor: CHOI, Yang-Lim, Seongnam-si Gyeonggi-do 463-906 (KR); SHIN, Jun-Bum, Suwon-si Gyeonggi-do 443-736 (KR); HWANG, Yong-Ho, Seoul 138-791 (KR); CHOI, Sang-Su, Hwaseong-si Gyeonggi-do 445-984 (KR)
(74) Representative: Appleyard Lees
(86) International application number: PCT/KR2009/004805
(87) International publication number: WO 2010/027158

(56) References cited:
- KR-A- 20060 015 045
- KR-A- 20060 098 158
- KR-A- 20070 031 837
- KR-A- 20080 021 424
- US-A1- 2006 150 217
- US-A1- 2008 071 690
- SERRAO C ET AL: "From OPIMA to MPEG IPMP-X: A standard's history across R&D projects", SIGNAL PROCESSING. IMAGE COMMUNICATION, ELSEVIER SCIENCE PUBLISHERS, AMSTERDAM, NL, vol. 20, no. 9-10, 1 October 2005 (2005-10-01), pages 972-994, XP027805659, ISSN: 0923-5965 [retrieved on 2005-10-01]
- SM SHEN ET AL: "IPMP Tools Management Function for MPEG-n IPMP System", 56. MPEG MEETING; 05-03-2001 - 09-03-2001; SINGAPORE; (MOTION PICTUREEXPERT GROUP OR ISO/IEC JTC1/SC29/WG11),, no. M7153, 8 March 2001 (2001-03-08), XP030036278, ISSN: 0000-0283
- GUN BANG ET AL: "Investigation of IPMP tool update functionality mapped on the M3W service", 74. MPEG MEETING; 17-10-2005 - 21-10-2005; NICE; (MOTION PICTUREEXPERT GROUP OR ISO/IEC JTC1/SC29/WG11),, no. M12592, 13 October 2005 (2005-10-13), XP030041262, ISSN: 0000-0243

## Description

Methods and apparatuses consistent with the present invention relate to managing a digital rights management (DRM) module Background Art Background Art
[1] Digital rights management (DRM) refers to technologies and services for preventing illegal use of digital contents and protecting rights and profits of content providers. Currently, most digital contents are protected with DRM schemes before being distributed.
[2] When content protected with a DRM scheme is received, a user removes the DRM scheme before using the content.
[3] In this case, the user removes the DRM scheme by using a DRM module. If the DRM scheme is supported by the DRM module, the user can remove the DRM scheme applied to the content. Otherwise, if the DRM scheme is not supported by the DRM module, the user cannot remove the DRM scheme and thus the content cannot be used.
[4] US2008/0071690 discloses a DRM system in which a DRM module is removed if it is an old version.

### [Disclosure]

### [Technical Solution]

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to an aspect of the present invention, there is provided a method of managing a digital rights management (DRM) module by using an apparatus for managing the DRM module, the method including selecting a content from among contents; receiving a DRM module for removing a DRM scheme applied to the content, the DRM module corresponding to the DRM scheme protecting the content; using the content protected with the DRM scheme, by using the DRM module; and partially or completely removing the DRM module

### [Advantageous Effects]

According to an exemplary embodiment of the present invention, the DRM module is removed if a predetermined period of time passes after the DRM module is received,
and thus the DRM module may be prevented from being analyzed and hacked by the user who receives the DRM module.

### Description of Drawings

The above and other aspects of the present invention will become more apparent by describing in detail exemplary embodiments thereof with reference to the attached drawings in which:
FIG. 1 is a flowchart of a digital rights management (DRM) module managing method according to an exemplary embodiment of the present invention;
FIG. 2 is a flowchart of a DRM module managing method according to another exemplary embodiment of the present invention;
FIG. 3 is a flowchart of a DRM module managing method according to another exemplary embodiment of the present invention; and
FIG. 4 is a block diagram of a DRM module managing apparatus according to an exemplary embodiment of the present invention.
FIG. 5 is a flowchart illustrating a method of managing a DRM module, according to another exemplary embodiment of the present invention;
FIG. 6 is a flowchart illustrating a method of managing a DRM module, according to another exemplary embodiment of the present invention;
FIG. 7 illustrates a content purchase response according to an exemplary embodiment of the present invention;
FIG. 8 is a block diagram of an apparatus for managing a DRM module, according to another exemplary embodiment of the present invention;
FIG. 9 is a flowchart illustrating a method of managing a DRM module, according to another exemplary embodiment of the present invention; and
FIG. 10 is a block diagram of an apparatus for managing a DRM module, according to another exemplary embodiment of the present invention

### Best Mode

According to an aspect of the present invention, there is provided a method of managing a digital rights management (DRM) module by using an apparatus for managing the DRM module, the method including selecting a content from among contents; receiving a DRM module for removing a DRM scheme applied to the content, the DRM module corresponding to the DRM scheme protecting the content; using the content protected with the DRM scheme, by using the DRM module; and partially or completely removing the DRM module.

The receiving of the DRM module may include selectively receiving the DRM module based on at least one of whether the apparatus is rightful and whether the apparatus is authorized to use the content.

The receiving of the DRM module may further include receiving a DRM policy for managing the DRM module, where the partial or complete removal of the DRM module may be performed based on the DRM policy, and the DRM policy may include at least one of information regarding a removal period of the DRM module, information required to determine whether to partially or completely remove the DRM module if the DRM module is to be removed, information required to determine a portion to be removed from the DRM module if the DRM module is partially removed, information required to determine whether to encrypt the DRM module before the DRM module is stored in the apparatus, information regarding a method of encrypting the DRM module if the DRM module is to be encrypted, and information required to determine apparatuses to which an operation of the DRM module is allowed.

The method may further include transmitting to a first server a content purchase request comprising an identifier of the apparatus, an identifier of the content, and payment information for purchasing the content; receiving from the first server a content purchase response representing that the content is purchased according to the content purchase request; and transmitting the content purchase response to a second server, and the receiving of the DRM module may include receiving the DRM module from the second server which selectively transmits the DRM module corresponding to the identifier of the content based on the content purchase response.

The method may further include transmitting a content request to a third server which stores the contents so as to request the third server to transmit the content, after receiving the DRM module, and the content protected with the DRM scheme may be received from the third server.

If the content protected with the DRM scheme is a content encrypted by using a pre-determined encryption key, the method may further include transmitting a decryption information request to a fourth server so as to request the fourth server to transmit de-ciyption information comprising a decryption key for decrypting the encrypted content; and receiving the decryption information from the fourth server, and the encrypted content may be decrypted by using the decryption key, before being used.

The partial or complete removal of the DRM module may be performed if the content is completely used, if power supply to the apparatus is blocked, or if a period of time set by the DRM policy passes.

The partial or complete removal of the DRM module may include removing a predetermined portion or a random portion of the DRM module based on the DRM policy.

Whether the apparatus is rightful may be determined based on at least one of whether an application comprised in the apparatus is tampered, whether the apparatus is revoked, and whether the apparatus is manufactured by a third party who is unrightful, and the application may include an operating system and a virtual machine.

Whether the apparatus is authorized to use the content may be determined based on whether the apparatus comprises information representing that the content is purchased.

The apparatus may include a virtual machine, and the DRM module may be executed in the virtual machine.

According to another aspect of the present invention, there is provided an apparatus for managing a digital rights management (DRM) module, the apparatus including a reception unit which receives a DRM module for removing a DRM scheme applied to a content selected from among contents, and receives the content protected with the DRM scheme; a content using unit which uses the content protected with the DRM scheme, by using the DRM module; and a module removal unit which partially or completely removes the DRM module.

The apparatus may further include a transmission unit which transmits to a first server a content purchase request comprising an identifier of the apparatus, an identifier of the content, and payment information for purchasing the content, and, if the reception unit receives from the first server a content purchase response representing that the content is purchased according to the content purchase request, the transmission unit may transmit the content purchase response to a second server, and the reception unit may receive the DRM module from the second server which selectively transmits the DRM module corresponding to the identifier of the content based on the content purchase response.

The apparatus may further include a storage unit which stores the DRM module and the content which are received by the reception unit.

According to another aspect of the present invention, there is provided a computer readable recording medium having recorded thereon a computer program for executing the method of managing a digital rights management (DRM) module by using an apparatus for managing the DRM module, the method including selecting a content from among contents; receiving a DRM module for removing a DRM scheme applied to the content, and the content protected with the DRM scheme; using the content protected with the DRM scheme, by using the DRM module; and partially or completely removing the DRM module.

According to another aspect of the present invention, there is provided a method of managing a digital rights management (DRM) module by using a DRM module managing apparatus, the method including: searching for one or more first DRM modules stored in the DRM module managing apparatus; transmitting to a first server a content purchase response including an identifier of content purchased by a user and identifiers of the one or more first DRM modules that are searched for in the DRM module managing apparatus; and receiving from the first server a second DRM module for removing a DRM scheme applied to the content purchased by the user and a second DRM policy for managing the second DRM module, or receiving one of the identifiers of the one or more first DRM modules, based on the content purchase response and the identifiers of the one or more first DRM modules.

The searching for the one or more first DRM modules may include further searching for one or more first DRM policies for managing the one or more first DRM modules, wherein the transmitting includes transmitting only the identifiers of the first DRM modules that are determined based on the one or more first DRM policies and the content purchase response from among the identifiers of the one or more first DRM modules.

Each of the second DRM policy and the one or more first DRM policies may include information about apparatuses in which the operation of a DRM module is allowed, the image quality of content in which the operation of a DRM module is allowed, the genre of the content in which the operation of a DRM module is allowed, a region in which the operation of a DRM is allowed, the type of an Internet service provider in which the operation of a DRM is allowed, and the type of a content provider in which the operation of a DRM is allowed, wherein each of the second DRM policy and the one or more first DRM policies further includes at least one of information regarding a removal period of the DRM module, information required to determine whether to partially or completely remove the DRM module if the DRM module is to be removed, information required to determine a portion to be removed from the DRM module if the DRM module is partially removed, information required to determine whether to encrypt the DRM module before the DRM module is stored in the apparatus, and information regarding a method of encrypting the DRM module if the DRM module is to be encrypted.

The method may further include partially or completely removing the one or more first DRM module, based on at least one of the second DRM policy and the one or more first DRM policies.

The partially or completely removing of the one or more first DRM modules may include partially or completely removing the one or more first DRM modules if there occurs at least one of cases where the DRM module managing apparatus is installed in a region in which the operation of the one or more first DRM modules is not allowed by the one or more first DRM policies, where a period of time set by the one or more first DRM policies passes, and where the one or more first DRM modules are prescribed to be removed according to the second DRM policy.

The method may further include: transmitting to a second server a content purchase request comprising an identifier of the DRM module managing apparatus, an identifier of the content to be purchased by the user, and payment information for purchasing the content; and receiving from the second server the content purchase response indicating that the content has been purchased according to the content purchase request.

The receiving may include, if one of the identifiers of the one or more first DRM modules and an identifier of the second DRM module are identical to each other, receiving the identifier of the first DRM module that is identical to the identifier of the second DRM module, and if one of the identifiers of the one or more first DRM modules and the identifier of the second DRM module are not identical to each other, receiving the second DRM module and the second DRM policy.

The identifiers of the one or more first DRM modules and the content purchase response may be encrypted and then transmitted.

According to another aspect of the present invention, there is provided an apparatus for managing a DRM module, the apparatus including: a storage unit storing first DRM modules; a searching unit searching for one or more first DRM modules stored in the storage unit; a transmission unit transmitting to a first server identifiers of the one or more first DRM modules and a content purchase response comprising an identifier of a content purchased by a user; and a reception unit receiving, based on the content purchase response and the identifiers of the one or more first DRM modules, from the first server a second DRM module for removing a DRM scheme applied to the content purchased by the user and a second DRM policy for managing the second DRM module, or receiving one of the identifiers of the one or more first DRM modules.

The apparatus may further include a module removal unit partially or completely removing the one or more first DRM modules based on at least one of the second DRM policy and the one or more first DRM policies.

According to another aspect of the present invention, there is provided a computer-readable recording medium having embodied thereon a program for executing a method of managing a DRM module by using a DRM module managing apparatus, the method including: searching for one or more first DRM modules stored in the DRM module managing apparatus; transmitting to a first server a content purchase response including an identifier of content purchased by a user and identifiers of the one or more first DRM modules that are searched for in the DRM module managing apparatus; and receiving from the first server a second DRM module for removing a DRM scheme applied to the content purchased by the user and a second DRM policy for managing the second DRM module, or receiving one of the identifiers of the one or more first DRM modules, based on the content purchase response and the identifiers of the one or more first DRM modules.

According to another aspect of the present invention, there is provided a computer-readable recording medium having embodied thereon a program for executing a method of managing a DRM module by using a DRM module managing apparatus, the method including: searching for one or more first DRM modules stored in the DRM module managing apparatus; determining, based on a content purchase response comprising an identifier of content purchased by a user and an identifier of a DRM module for removing a DRM scheme applied to the content, whether the identifier of the DRM module and at least one of identifiers of the one or more first DRM modules are identical to each other; selectively transmitting the content purchase response to a first server based on the determination result; and receiving from the first server a second DRM module for removing the DRM scheme applied to the content purchased by the user in response to the content purchase response.

The method may further include transmitting to a second server a content purchase request comprising an identifier of the apparatus, an identifier of the content to be purchased by the user, and payment information for purchasing the content; and receiving from the second server the content purchase response indicating that the content is purchased according to the content purchase request.

The method may further include: transmitting to a third server that stores a plurality of contents a content request requesting the third server to transmit the content purchased by the user, after the receiving of the second DRM module; and receiving from the third server the content protected by the DRM scheme based on the content request.

The transmitting of the content purchase response to the first server may include transmitting the content purchase response to the first server if the identifier of the DRM module and at least one of the identifiers of the one or more first DRM modules are not identical to each other.

According to another aspect of the present invention, there is provided an apparatus for managing a DRM module, the apparatus including: a storage unit storing first DRM modules; a searching unit searching for one or more first DRM modules stored in the storage unit; a comparing unit determining, based on a content purchase response comprising an identifier of a content purchased by a user and an identifier of a DRM module for removing a DRM scheme applied to the content, whether the identifier of the DRM module and at least one of identifiers of the one or more first DRM modules are identical to each other; a transmission unit selectively transmitting to a first server the content purchase response based on the determination result; and a reception unit receiving from the first server a second DRM module for removing the DRM scheme applied to the content purchased by the user in response to the content purchase response.

According to another aspect of the present invention, there is provided a computer-readable recording medium having recorded thereon a program for executing a method of managing a DRM module by means of a DRM module managing apparatus, the method including: searching for one or more first DRM modules stored in the DRM module managing apparatus; determining, based on a content purchase response comprising an identifier of content purchased by a user and an identifier of a DRM module for removing a DRM scheme applied to the content, whether the identifier of the DRM module and at least one of identifiers of the one or more first DRM modules are identical to each other; selectively transmitting the content purchase response to a first server based on the determination result; and receiving from the first server a second DRM module for removing the DRM scheme applied to the content purchased by the user in response to the content purchase response.

### Mode for Invention

Hereinafter, the present invention will be described in detail by explaining exemplary embodiments of the invention with reference to the attached drawings.

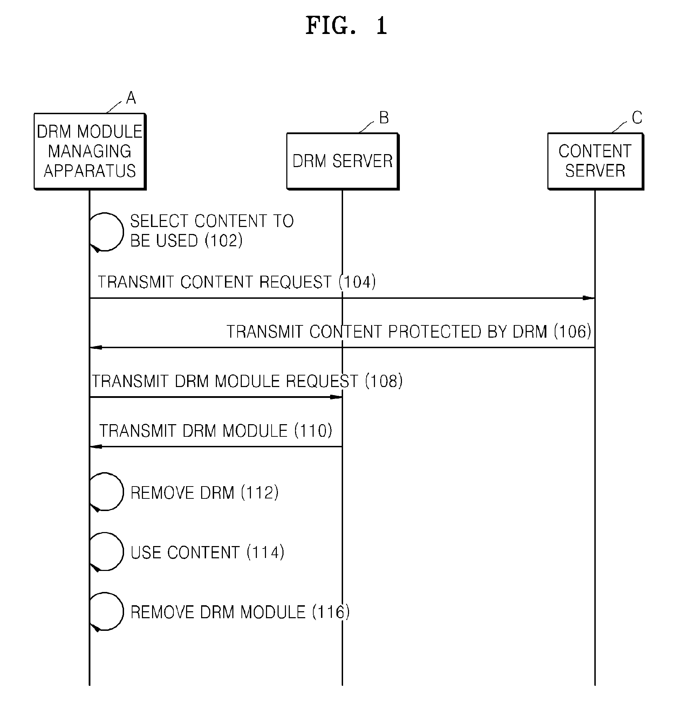

FIG. 1 is a flowchart of a digital rights management (DRM) module managing method according to an exemplary embodiment of the present invention. In FIG. 1, a DRM module managing apparatus A includes all apparatuses using contents, for example, desktop computers, laptop computers, MPEG audio layer-3 (MP3) players, and digital versatile disc (DVD) players.

Referring to FIG. 1, in operation 102, a user selects a content to be used from among contents provided by a content server C.

For example, if the content server C provides video on demand (VOD) contents, the user selects one of the VOD contents through the DRM module managing apparatus A.

In operation 104, the DRM module managing apparatus A transmits a content request to the content server C in order to request the content server C to transmit the content selected by the user.

In operation 106, the content server C transmits to the DRM module managing apparatus A the content protected with a DRM scheme to prevent the content from being used by an unauthorized user.

In operation 108, the DRM module managing apparatus A transmits a DRM module request to a DRM server B in order to request the DRM server B to transmit a DRM module for removing the DRM scheme applied to the content selected by the user.

For example, if the VOD contents provided by the content server C are protected with different DRM schemes from each other, the DRM module managing apparatus A transmits the DRM module request to the DRM server B in order to request the DRM server B to transmit the DRM module for removing the DRM scheme applied to the content selected by the user from among the VOD contents.

In operation 110, the DRM server B transmits the DRM module to the DRM module managing apparatus A based on the DRM module request.

In this case, the DRM module request may include an identifier of the content selected by the user, and the DRM server B transmits the DRM module corresponding to the identifier.

Also, according to another exemplary embodiment of the present invention, the DRM server B may transmit the DRM module after determining, for example, whether the DRM module managing apparatus A is rightful, or whether the DRM module managing apparatus A is authorized to use the content selected by the user.

The DRM module transmitted to the DRM module managing apparatus A may be stored in a volatile short-term memory device such as random access memory (RAM) or a non-volatile long-term memory device such as a hard disk in the DRM module managing apparatus A.

As such, according to an exemplary embodiment, the DRM module corresponding to the DRM scheme applied to the content selected by the user, which is received from the DRM server B, is used instead of a DRM module included in the DRM module managing apparatus A. Thus, a problem of the conventional DRM module management method and apparatus in that the user cannot use a content protected with a DRM scheme that cannot be removed by using the DRM module included in the DRM module managing apparatus A may be solved.

Meanwhile, according to an exemplary embodiment of the present invention, the DRM module for removing the DRM scheme applied to the content is received after the content protected with the DRM scheme is received. However, according to another exemplary embodiment of the present invention, the content protected with the DRM scheme may be received after the DRM module for removing the DRM scheme applied to the content is received.

In operation 112, the DRM module managing apparatus A removes the DRM scheme applied to the content with the DRM module.

In operation 114, the DRM module managing apparatus A uses the content from which the DRM scheme is removed.

In this case, the content may be used by, for example, reproducing or executing the content. For example, the content may be used by reproducing the content if the content is a video file, or by executing the content if the content is an application.

In operation 116, the DRM module managing apparatus A partially or completely removes the DRM module.

For example, the DRM module managing apparatus A may partially or completely remove the DRM module stored in the DRM module managing apparatus A if the content is completely used or if power supply to the DRM module managing apparatus A is blocked.

Also, when the DRM module is partially removed, the DRM module managing apparatus A may remove a predetermined portion or a random portion of the DRM module. As such, according to an exemplary embodiment of the present invention, the DRM module is removed if a predetermined period of time passes after the DRM module is received, and thus the DRM module may be prevented from being analyzed and hacked by the user who receives the DRM module.

Also, according to an exemplary embodiment of the present invention, the DRM module may be partially removed and thus, when the same DRM module is required later, only a removed portion of the DRM module may be received and used.

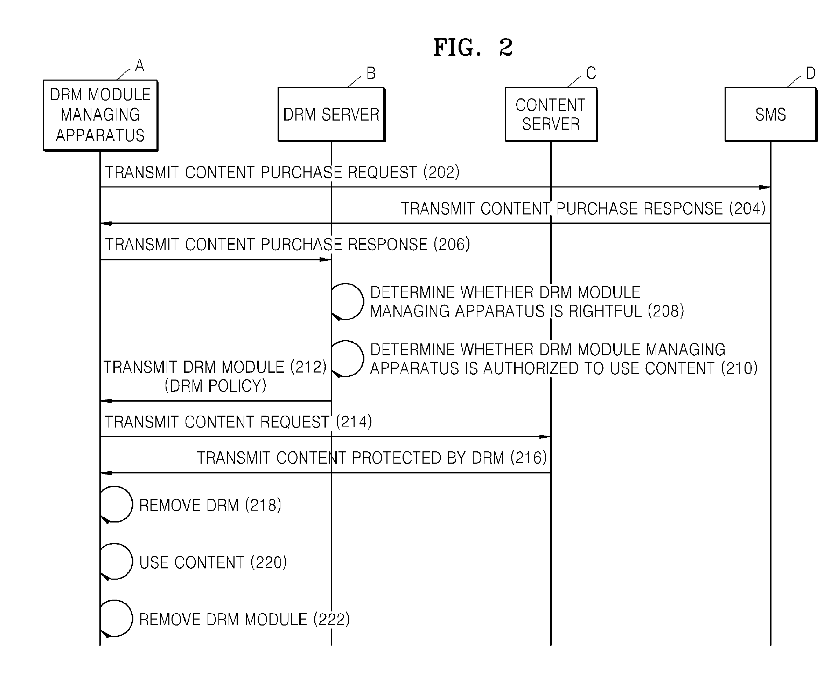

FIG. 2 is a flowchart of a DRM module managing method according to another exemplary embodiment of the present invention.

Referring to FIG. 2, in operation 202, a DRM module managing apparatus A transmits a content purchase request to a subscriber management server (SMS) D in order to purchase a content selected by a user.

In this case, the content purchase request may include an identifier of the DRM module managing apparatus A, an identifier of the content selected by the user, and payment information for purchasing the content selected by the user.

The payment information for purchasing the content may include information regarding a money transfer, a credit card payment, or reward points required to purchase the content.

In operation 204, the SMS D transmits to the DRM module managing apparatus A, a content purchase response representing that the content selected by the user is purchased according to the content purchase request.

In this case, the content purchase response may include the identifier of the DRM module managing apparatus A, the identifier of the content purchased according to the content purchase request, information regarding a valid period of the content purchase response, an electronic signature with respect to the identifier of the DRM module managing apparatus A, the identifier of the content purchased according to the content purchase request, and the information regarding the valid period, etc.

Here, the content purchase response may be implemented as a token or a ticket.

Meanwhile, the SMS D may encrypt the content purchase response by using a public key of the DRM module managing apparatus A, before the content purchase response is transmitted.

In operation 206, the DRM module managing apparatus A transmits the content purchase response to a DRM server B.

In this case, according to another exemplary embodiment of the present invention, the DRM module managing apparatus A may further transmit information regarding the DRM module managing apparatus A. For example, the DRM module managing apparatus A may further transmit the identifier of the DRM module managing apparatus A, and information regarding a portion of an application included in the DRM module managing apparatus A.

The information regarding the DRM module managing apparatus A may be used when the DRM server B determines whether the DRM module managing apparatus A is rightful.

In operation 208, the DRM server B determines whether the DRM module managing apparatus A is rightful.

In this case, the DRM server B may determine whether the DRM module managing apparatus A is rightful, according to, for example, whether the application included in the DRM module managing apparatus A is tampered, whether the DRM module managing apparatus A is revoked, or whether the DRM module managing apparatus A is manufactured by a third party who is unrightful.

For example, the DRM server B may determine whether the DRM module managing apparatus A is revoked, and whether the DRM module managing apparatus A is manufactured by a third party who is unrightful, according to the identifier of the DRM module managing apparatus A, which is included in the content purchase response.

Also, when the information regarding a portion of the application is received from the DRM module managing apparatus A, the DRM server B may analyze whether the portion of the application is tampered in comparison to an original application. The DRM server B may determine that the DRM module managing apparatus A is unrightful if the portion of the application is tampered and may determine that the DRM module managing apparatus A is rightful if the portion of the application is not tampered.

Also, according to another exemplary embodiment of the present invention, the DRM server B may request the DRM module managing apparatus A to transmit a certain portion of the application and may determine whether the DRM module managing apparatus A is rightful, according to whether the certain portion of the application, which is received based on such a request, is tampered.

Meanwhile, if the DRM module managing apparatus A is determined as being unrightful, the DRM server B does not transmit a DRM module to the DRM module managing apparatus A.

In operation 210, if the DRM module managing apparatus A is determined as being rightful in operation 208, the DRM server B determines whether the DRM module managing apparatus A is authorized to use the content selected by the user, based on the content purchase response.

In more detail, the DRM server B may determine that the DRM module managing apparatus A is authorized to use the content selected by the user, only if the content purchase response of the DRM module managing apparatus A is valid with respect to the content selected by the user.

For example, the DRM server B may determine whether the content purchase response is tampered or is in the valid period, and may determine that the DRM module managing apparatus A is authorized to use the content selected by the user if the content purchase response is not tampered and is in the valid period.

Also, operation 210 may be performed prior to operation 208, and one of operations 208 and 210 may be omitted.

In operation 212, based on the determination results of operations 208 and 210, the DRM server B selectively transmits to the DRM module managing apparatus A, a DRM module corresponding to the identifier of the content, which is included in the content purchase response.

In this case, the DRM server B may further transmit a DRM policy for managing the DRM module, to the DRM module managing apparatus A. The DRM policy may be separately transmitted or may be included in the DRM module.

For example, the DRM policy may include information regarding a removal period of the DRM module, information required to determine whether to partially or completely remove the DRM module when the DRM module is to be removed, information required to determine a portion to be removed from the DRM module if the DRM module is partially removed, information required to determine whether to encrypt the DRM module before the DRM module is stored in the DRM module managing apparatus A, information regarding a method of encrypting the DRM module if the DRM module is encrypted, and information required to determine apparatuses to which an operation of the DRM module is allowed, etc.

The DRM module managing apparatus A may encrypt the DRM module before the DRM module is stored, according to the DRM policy. If the operation of the DRM module is not allowed to the DRM module managing apparatus A, the operation of the DRM module may be restricted.

In operation 214, the DRM module managing apparatus A transmits a content request to a content server C in order to request the content server C to transmit the content selected by the user.

In operation 216, the content server C protects a content corresponding to the content request by using a DRM scheme and transmits the content to the DRM module managing apparatus A.

In this case, the content is protected with the DRM scheme that may be removed by using the DRM module received in operation 212.

In operation 218, the DRM module managing apparatus A removes the DRM scheme applied to the content with the DRM module.

In operation 220, the DRM module managing apparatus A uses the content from which the DRM scheme is removed.

In operation 222, the DRM module managing apparatus A partially or completely removes the DRM module stored in the DRM module managing apparatus A.

In this case, the DRM module managing apparatus A may partially or completely remove the DRM module based on the DRM policy. For example, the DRM module managing apparatus A may partially or completely remove the DRM module if the content protected with the DRM scheme is completely used, if power supply to the DRM module managing apparatus A is blocked, or if a period of time, which is set by the DRM policy, passes.

Also, when the DRM module is partially removed, the DRM module managing apparatus A may remove a predetermined portion or a random portion of the DRM module according to the DRM policy.

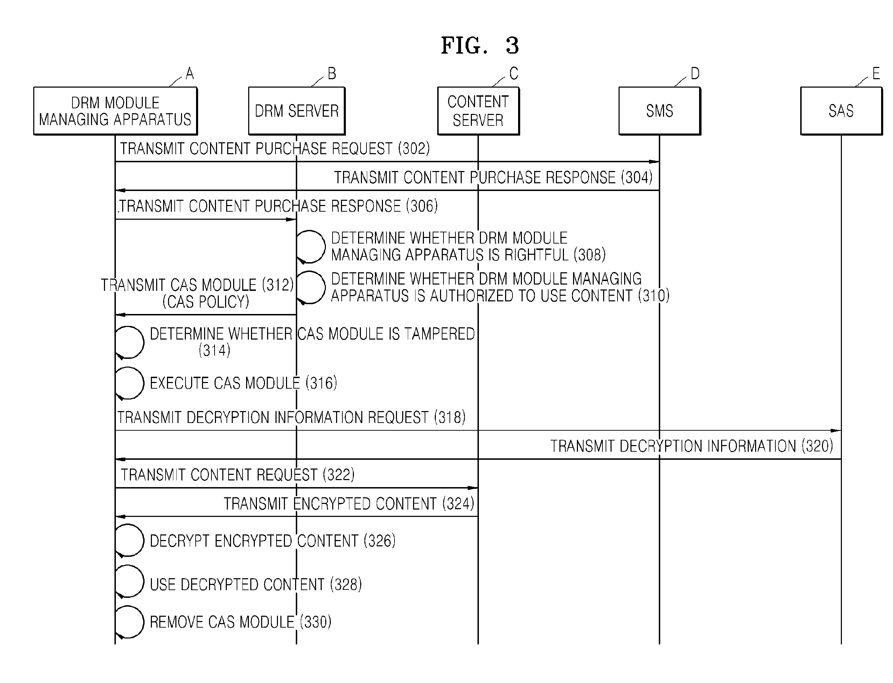

FIG. 3 is a flowchart of a DRM module managing method according to another exemplary embodiment of the present invention. In FIG. 3, it is assumed that a content server C provides broadcasting contents through a paid-for channel.

Referring to FIG. 3, in operation 302, a DRM module managing apparatus A transmits a content purchase request to an SMS D in order to purchase a content selected by a user.

In this case, the content purchase request is transmitted in order to purchase a broadcasting content provided by the content server C through the paid-for channel. For example, the user may purchase an authorization to use the broadcasting content provided by the content server C for a month.

In operation 304, the SMS D transmits to the DRM module managing apparatus A, a content purchase response representing that the broadcasting content provided by the content server C is purchased.

For example, the SMS D may transmit to the DRM module managing apparatus A the content purchase response allowing use of the broadcasting content provided by the content server C for a month from a current point of time.

In operation 306, the DRM module managing apparatus A transmits the content purchase response to a DRM server B.

In operation 308, the DRM server B determines whether the DRM module managing apparatus A is rightful.

In operation 310, if the DRM module managing apparatus A is determined as being rightful in operation 308, the DRM server B determines whether the DRM module managing apparatus A is authorized to use the broadcasting content provided by the content server C, based on the content purchase response.

For example, when the content purchase response is set to be valid for a month from August 1, 2008 to August 31, 2008, if the DRM module managing apparatus A transmits the content purchase response to the DRM server B on September 1, 2008, the DRM server B may determine that the DRM module managing apparatus A is not authorized to use the broadcasting content.

In operation 312, based on the determination results of operations 308 and 310, the DRM server B selectively transmits to the DRM module managing apparatus A, a conditional access system (CAS) module for removing an encryption scheme applied to the broadcasting content provided by the content server C.

The CAS module may be a kind of DRM module.

Also, the DRM server B may transmit a CAS policy for managing the CAS module to the DRM module managing apparatus A, together with the CAS module.

In operation 314, the DRM module managing apparatus A determines whether the CAS module is tampered.

In operation 316, if the CAS module is not tampered, the DRM module managing apparatus A executes the CAS module.

The CAS module may be executed by a virtual machine included in the DRM module managing apparatus A.

In operation 318, the DRM module managing apparatus A transmits a decryption information request to a subscriber authorization server (SAS) E in order to request the SAS E to transmit decryption information including a decryption key for decrypting a content encrypted by using a predetermined encryption key.

The DRM module managing apparatus A may transmit the content purchase response instead of the decryption information request.

In operation 320, the SAS E transmits the decryption information to the DRM module managing apparatus A.

If the SAS E receives the content purchase response from the DRM module managing apparatus A, the SAS E may determine whether the DRM module managing apparatus A is authorized to use the broadcasting content based on the content purchase response, and may transmit the decryption information only if the DRM module managing apparatus A is authorized to use the broadcasting content.

In operation 322, the DRM module managing apparatus A transmits a content request to the content server C in order to request the content server C to transmit the content selected by the user.

In operation 324, the content server C encrypts a content corresponding to the content request and transmits the encrypted content to the DRM module managing apparatus A.

In operation 326, the DRM module managing apparatus A decrypts the encrypted content by using the CAS module.

In operation 328, the DRM module managing apparatus A uses the decrypted content.

In operation 330, the DRM module managing apparatus A partially or completely removes the CAS module stored in the DRM module managing apparatus A.

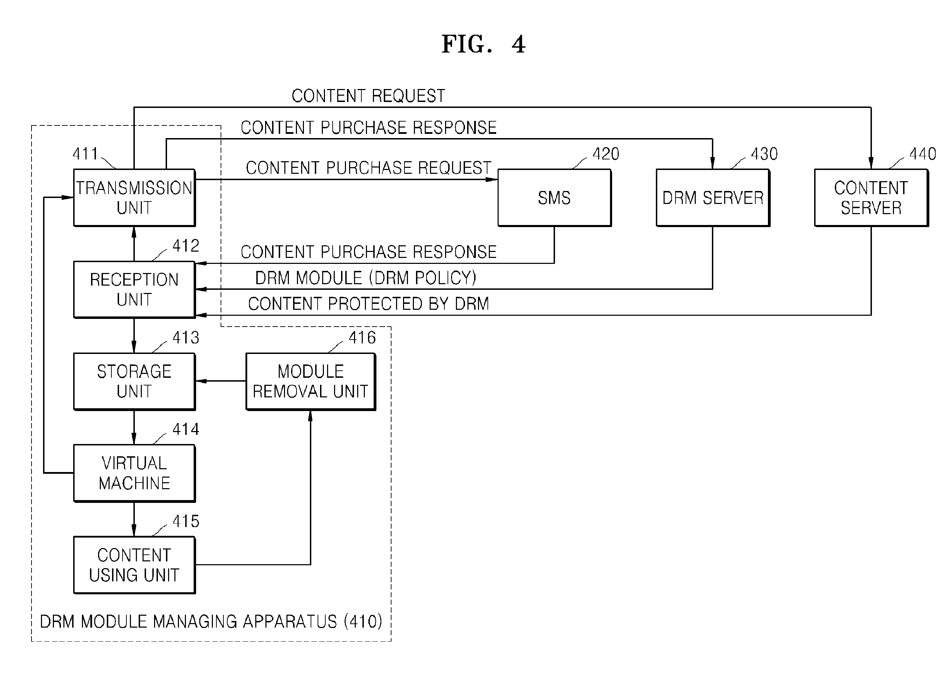

FIG. 4 is a block diagram of a DRM module managing apparatus 410 according to an exemplary embodiment of the present invention.

Referring to FIG. 4, the DRM module managing apparatus 410 includes a transmission unit 411, a reception unit 412, a storage unit 413, a virtual machine 414, a content using unit 415, and a module removal unit 416. However, for convenience of explanation, an SMS 420, a DRM server 430, and a content server 440 are further illustrated in FIG. 4.

The transmission unit 411 transmits a content purchase request to the SMS 420 in order to purchase a content to be used by a user.

The reception unit 412 receives a content purchase response from the SMS 420.

The content purchase response may be implemented as a token or a ticket, as described above with reference to FIG. 2.

When the reception unit 412 receives the content purchase response, the transmission unit 411 transmits the content purchase response to the DRM server 430.

The transmission unit 411 may further transmit information regarding the DRM module managing apparatus 410 to the DRM server 430, in addition to the content purchase response.

The DRM server 430 receives the content purchase response from the transmission unit 411 and transmits a DRM module to the reception unit 412. The DRM server 430 may transmit the DRM module only if it is determined that the DRM module managing apparatus 410 is rightful and is authorized to use the content, based on the content purchase response. Also, the DRM server 430 may transmit a DRM policy together with the DRM module.

When the reception unit 412 receives the DRM module, the transmission unit 411 transmits a content request to the content server 440 in order to request the content server 440 to transmit the content. The content server 440 receives the content request and transmits the content protected by a DRM scheme to the reception unit 412.

According to an exemplary embodiment of the present invention, the reception unit 412 receives the content protected by the DRM scheme after the DRM module is received. However, according to another exemplary embodiment of the present invention, the reception unit 412 may receive the DRM module for removing the DRM scheme after the content protected by the DRM scheme is received.

The storage unit 413 stores the DRM module and the content which are received by the reception unit 412. The storage unit 413 may include a volatile short-term memory device such as RAM and/or a non-volatile long-term memory device such as a hard disk.

The virtual machine 414 reads and executes the DRM module stored in the storage unit 413. When executed, the DRM module reads the content protected with the DRM scheme from the storage unit 413 and removes the DRM scheme applied to the content.

Also, if the content received by the reception unit 412 is encrypted by using a predetermined encryption key, a decryption key for decrypting the content is required. In this case, the DRM module executed in the virtual machine 414 may create a de-ciyption information request for requesting an SAS (not shown) to transmit decryption information including the decryption key.

The decryption information request is transmitted by the transmission unit 411. The SAS receives the decryption information request and transmits the decryption information to the reception unit 412.

The content using unit 415 receives from the virtual machine 414 the content from which the DRM scheme is removed and uses the content.

When the content is completely used by the content using unit 415, the module removal unit 416 partially or completely removes the DRM module stored in the storage unit 413, within a predetermined period of time after the content is completely used.

For example, the module removal unit 416 may partially or completely remove the DRM module from the storage unit 413, immediately after the content is completely used. Also, the module removal unit 416 may partially or completely remove the DRM module from the storage unit 413, if power supply to the DRM module managing apparatus 410 is blocked, or if a period of time, which is set by the DRM policy, passes.

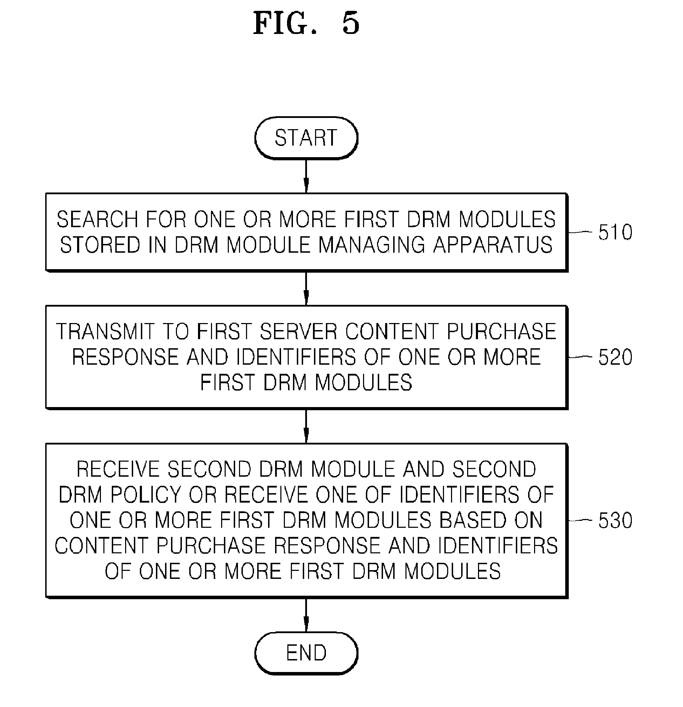

FIG. 5 is a flowchart illustrating a method of managing a DRM module, according to another exemplary embodiment of the present invention.

In operation 510, one or more first DRM modules stored in a DRM module managing apparatus are searched for.

In operation 520, identifiers of the one or more first DRM modules and a content purchase response including an identifier of content purchased by a user are transmitted to a first server.

Here, a content purchase response indicates that, after the content purchase request including the identifier of the content to be purchased by the user and payment information for purchasing the content has been transmitted to the second server, the content to be purchased by the user has been purchased according to the content purchase request.

If the one or more first DRM modules are not stored in the DRM module managing apparatus, the DRM module managing apparatus does not perform operation 530, and performs operations such as those performed in FIG. 2 or 3 after the DRM module managing apparatus transmits the content purchase response.

In operation 530, based on the content purchase response and the identifiers of the one or more first DRM modules transmitted to the first server, a second DRM module for removing a DRM scheme applied to the content purchased by the user and a second DRM policy for managing the second DRM module are received, or one of the identifiers of the one or more first DRM modules transmitted to the first server is received.

For example, if one of the identifiers of the one or more first DRM modules received from the DRM module managing apparatus is identical to an identifier of the second DRM module for removing the DRM scheme applied to the content purchased by the user, the first server may transmit the identifier of the first DRM module that is identical to the identifier of the second DRM module to the DRM module managing apparatus, and if no identifier of the one or more first DRM modules received from the DRM module managing apparatus is identical to the identifier of the second DRM module, the first server may transmit the second DRM module and the second DRM policy to the DRM module managing apparatus.

The first server determines the second DRM module (to transmit to the DRM module managing apparatus) by using the identifier of the content included in the content purchase response. Different DRM modules are allocated to different identifiers of contents. Accordingly, after the first server determines the identifier of the second DRM module, which corresponds to the identifier of the content, the first server determines whether one of the identifiers of the one or more first DRM modules is identical to the identifier of the second DRM module.

The reason why the first server transmit the second DRM module and the second DRM policy to the DRM module managing apparatus may be because it is determined that there is no DRM module for removing the DRM scheme applied to the content purchased by the user from among the first DRM modules stored in the DRM module managing apparatus.

Here, the first server transmits one of the identifiers of the first DRM modules to the DRM module managing apparatus in order to notify the DRM module managing apparatus which DRM module can remove the DRM scheme applied to the content purchased by the user from among the first DRM modules stored in the DRM module managing apparatus.

If there exists a DRM module for removing the DRM scheme applied to the content purchased by the user from among the first DRM modules stored in the DRM module managing apparatuses, the first DRM module stored in the DRM module managing apparatus can be reused without receiving a new DRM module.

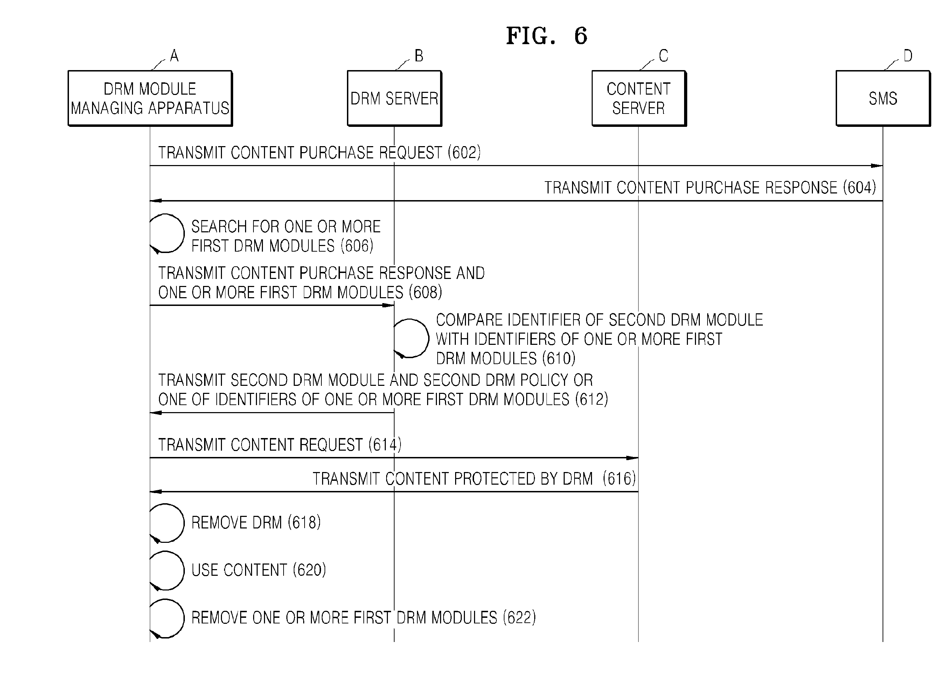

FIG. 6 is a flowchart illustrating a method of managing a DRM module, according to another exemplary embodiment of the present invention.

In operation 602, a DRM module managing apparatus A transmits to an SMS D a content purchase request for purchasing content to be purchased by a user.

The content purchase request includes an identifier of the DRM module managing apparatus A, an identifier of the content to be purchased by the user, and payment information for purchasing the content.

In operation 604, the SMS D transmits to the DRM module managing apparatus A a content purchase response indicating that the content to be purchased by the user has been purchased according to the content purchase request.

The content purchase response may include an identifier of the DRM module managing apparatus A, an identifier of the content purchased according to the content purchase request, information about a valid period of the content purchase response, and an electronic signature with respect to information about the valid period and the identifiers. The content purchase response may further include information about an addresses of a Content server and a DRM server.

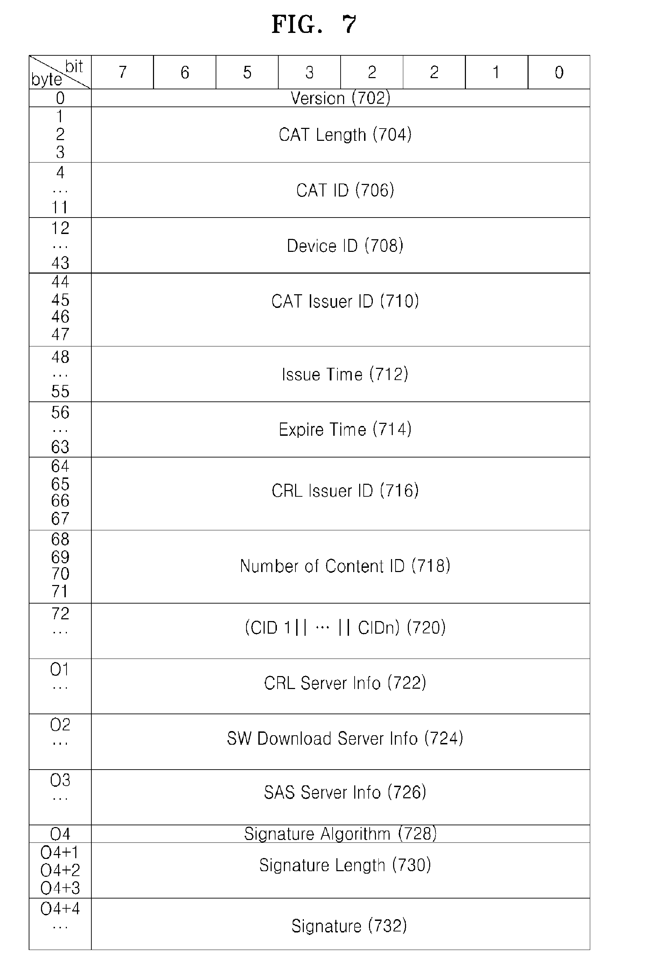

The structure of the content purchase response will be explained later in detail with reference to FIG. 7.

In operation 606, one or more first DRM modules stored in the DRM module managing apparatus A are searched for.

Additionally, one or more first DRM policies for managing the one or more first DRM modules may be further searched for in the DRM module managing apparatus A.

The one or more first DRM policies may include information about apparatuses in which the operation of a corresponding DRM module is allowed, the image quality of content in which the operation of a corresponding DRM module is allowed, the genre of the content in which the operation of a corresponding DRM module is allowed, a region in which the operation of a corresponding DRM module is allowed, an Internet service provider type in which the operation of a corresponding DRM module is allowed, and a content provider type in which the operation of a corresponding DRM module is allowed.

The apparatuses may be classified according to manufacturers, the image quality of the content may be classified into a high definition (HD) level and a standard definition (SD) level, the genre of the content may be classified into comedy, drama, and action, the region may be classified into a domestic region and a foreign region, the domestic region may be classified into specific places, and the content provider type may be classified into a type in which the content provider provides content that is only reproduced and a type in which the content provider provides content that requires bidirectional communication.

For example, a DRM policy may set that a DRM module's operation is allowed if the image quality of content is an HD level, the genre of the content is comedy, and the region is Seoul. In this case, if the DRM module is installed in a region other than Seoul, the DRM module may not be operated.

The one or more first DRM policies may further include information about a removal period of the DRM module, information about whether the DRM module is to be partially removed or completely removed, information about a portion of the DRM module to be removed, information about whether the DRM module is to be encrypted and stored by the DRM module managing apparatus, information about a method of encrypting the DRM module, and information about apparatuses in which the operation of the DRM module is allowed.

The information about the removal period of the DRM module may be differently set according to the image quality of the content, the genre of the content, and the like. For example, a DRM module may be set by a DRM policy such that a DRM module for an HD level content is removed immediately after the HD level content has been reproduced, and a DRM module for an SD level content is removed 3 months after the DRM module has been received. The DRM module for the SD level content may be stored in the DRM module managing apparatus for these 3 months.

In operation 608, the DRM module managing apparatus A transmits to the DRM server B the content purchase response and the one or more first DRM modules.

The content purchase response and identifiers of the one or more first DRM modules may be encrypted and transmitted to the first server.

Alternatively, if the one or more first DRM policies are searched for along with the one or more first DRM modules in operation 606, only identifiers of first DRM modules that are determined based on the content purchase response and the one or more first DRM policies, from among the identifiers of all of the one or more first DRM modules stored in the DRM module managing apparatus, may be transmitted to the first server.

For example, if the content purchase response is analyzed and content included in the content purchase response is content that can be used only in Seoul, only identifiers of first DRM modules having operations that are allowed in Seoul by the one or more first DRM policies from among all of the one or more first DRM modules may be transmitted to the first server.

Alternatively, a first DRM policy identical to a DRM policy to be applied to the content included in the content purchase response may exist in the one or more first DRM policies stored in the DRM module managing apparatus. The DRM module managing apparatus may not transmit the content purchase response and the identifiers of the one or more first DRM modules to the first server, but may remove the DRM scheme applied to the content by using the first DRM module corresponding to the first DRM policy identical to the DRM policy applied to the content included in the content purchase response and may use the content from which the DRM scheme is removed.

In operation 610, the DRM server B compares the identifiers of the one or more first DRM modules received from the DRM module managing apparatus to an identifier of a second DRM module for removing the DRM scheme applied to the content included in the content purchase response.

In operation 612, according to the comparison result, the DRM server B transmits to the DRM module managing apparatus A the second DRM module and the second DRM policy, or transmits to the DRM module managing apparatus A one of the identifiers of the one or more first DRM modules received from the DRM module managing apparatus A.

Alternatively, when one of the identifiers of the one or more first DRM modules is transmitted to the DRM module managing apparatus A, a new first DRM policy may be further transmitted.

For example, if an estimated removal date of a first DRM module corresponding to the content included in the content purchase response from among the first DRM modules stored in the DRM module managing apparatus A needs to be changed, the DRM server B may transmit a new first DRM policy, by which the estimated removal date of the first DRM module is changed, to the DRM module managing apparatus A along with an identifier of the first DRM module. The second DRM policy may include information about apparatuses in which the operation of a DRM module is allowed, the image quality of content in which the operation of a DRM module is allowed, the genre of the content in which the operation of a DRM module is allowed, a region in which the operation of a DRM module is allowed, the type of an Internet service provider in which the operation of a DRM module is allowed, and the type of a content provider in which the operation of a DRM module is allowed, information about a removal period of the DRM module, information about whether the DRM module is to be partially removed or completely removed, information about a portion of the DRM module to be removed, information about whether the DRM module is to be encrypted and stored by the DRM module managing apparatus A, information about a method of encrypting the DRM module, and information used to determine the apparatuses in which the operation of the DRM module is allowed.

For convenience of explanation, a DRM module stored in the DRM module managing apparatus A and a DRM policy for managing the DRM module have been referred to as a first DRM module and a first DRM policy, respectively, and a DRM module for removing a DRM scheme applied to a content purchased by a user and a DRM policy for managing the DRM module which are stored in a DRM server B have been referred to as a second DRM module and a second DRM policy, respectively, in FIG. 6. However, if the second DRM module and the second DRM policy are received from the DRM server B and then stored in the DRM module managing apparatus A, the second DRM module and the second DRM policy respectively become a first DRM module and a first DRM policy. In operation 614, the DRM module managing apparatus A transmits to the content server C a content request requesting the content server C to transmit the content purchased by the user.

In operation 616, the content server C protects a content corresponding to the content request by using the DRM scheme and transmits the protected content to the DRM module managing apparatus A.

In operation 618, the DRM module managing apparatus A removes the DRM scheme applied to the content with the DRM module.

In operation 620, the DRM module managing apparatus A uses the content from which the DRM scheme is removed.

In operation 622, the DRM module managing apparatus A partially or completely removes the one or more first DRM modules stored in the DRM module managing apparatus A.

For example, when the DRM module managing apparatus A is installed in a region in which the operation of a first DRM module is not allowed by a first DRM policy, when a period of time set by the first DRM policy passes, or when the first DRM module is prescribed to be removed according to a second DRM policy, the DRM module managing apparatus A partially or completely removes the first DRM module.

FIG. 7 illustrates a content purchase response according to an exemplary embodiment of the present invention.

A Version field 702 indicates the version of the content purchase response.

A CAT Length field 704 indicates the total length of the content purchase response. Here, although CAT is an example of the content purchase response, hereinafter, CAT is referred to as a content purchase.

A CAT ID field 706 indicates an identifier for identifying the content purchase response.

A Device ID field 708 indicates the identifier of a device requesting the content purchase response.

A CAT Issuer ID field 710 indicates the identifier of an SMS issuing the content purchase response. An Issue Time field 712 indicates a time at which the content purchase response is issued.

An Expire Time field 714 indicates a time at which the content purchase response is expired. If the time passes, the content purchase response cannot be used.

A CRL Issuer ID field 716 indicates an identifier for identifying an issuer of a content purchase response revocation list.

Here, the content purchase response revocation list is a list of revoked content purchase responses from among a plurality of content purchase responses.

A Number of Content ID field 718 indicates the number of each of identifiers of contents.

Accordingly, if a number is allocated to each of the identifiers of the contents, content can be identified by using a number composed of only digits.

A (CID 1∥ ... ∥ CIDn) field 720 indicates a list of contents purchased by a user.

A CRL Server Info field 722 indicates information about a CRL server issuing the CAT revocation list. A CRL Server Info may be used to access to a CRL server.

An SW Download Server Info field 724 indicates information about a content server. An SW Download Server Info may be used to access to the content server.

An SAS Server Info field 726 indicates information about an SAS server. An SAS Server Info may be used to access to the SAS server.

A Signature Algorithm field 728 indicates an algorithm applied to an electronic signature.

A Signature Length field 730 indicates the total length of the electronic signature.

A Signature field 732 indicates an electronic signature with respect to the fields 702 through 730 issued by the SMS.

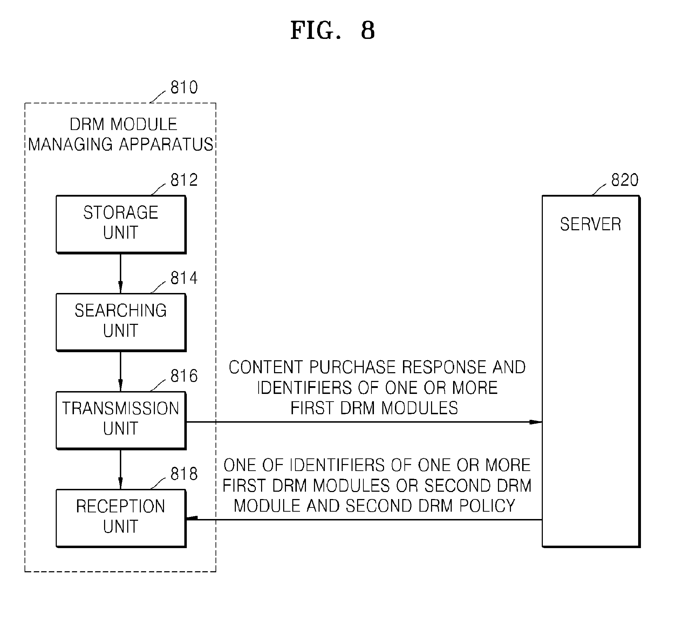

FIG. 8 is a block diagram of an apparatus for managing a DRM module (hereinafter referred to as a DRM module managing apparatus 810), according to another exemplary embodiment of the present invention.

Referring to FIG. 8, the DRM module managing apparatus 810 includes a storage unit 812, a searching unit 814, a transmission unit 816, and a reception unit 818. In addition, for convenience of explanation, a server 820 is further illustrated.

The storage unit 812 stores first DRM modules.

The searching unit 814 searches for one or more first DRM modules stored in the storage unit 812.

The searching unit 814 may further search for one or more first DRM policies for managing the one or more first DRM modules.

The transmission unit 816 transmits to the server 820 identifiers of the one or more first DRM modules and a content purchase response including an identifier of a content purchased by a user.

If the identifiers of the one or more first DRM modules are searched by the searching unit 814, the transmission unit 816 may transmit to the server 820 identifiers of first DRM modules determined based on the content purchase response and the one or more first DRM policies, from among identifiers of all of the first DRM modules stored in the storage unit 812.

The reception unit 818 receives a second DRM module and a second DRM policy from the server 820 based on the identifiers of the one or more first DRM modules and the content purchase response transmitted by the transmission unit 816, or one of the identifiers of the one or more first DRM modules transmitted by the transmission unit 816.

The DRM module managing apparatus 810 may further include a module removal unit (not shown) that partially or completely removes the one or more first DRM modules based on at least one of the second DRM policy and the one or more first DRM policies.

The server 820 of FIG. 8 may include all of the DRM server B, the content server C, and the SMS D of FIG. 6. Although not shown, the transmission unit 816 may further transmit a content purchase request, a content purchase response, and a content request, and the reception unit 818 may further receive the content purchase response and content protected by a DRM scheme.

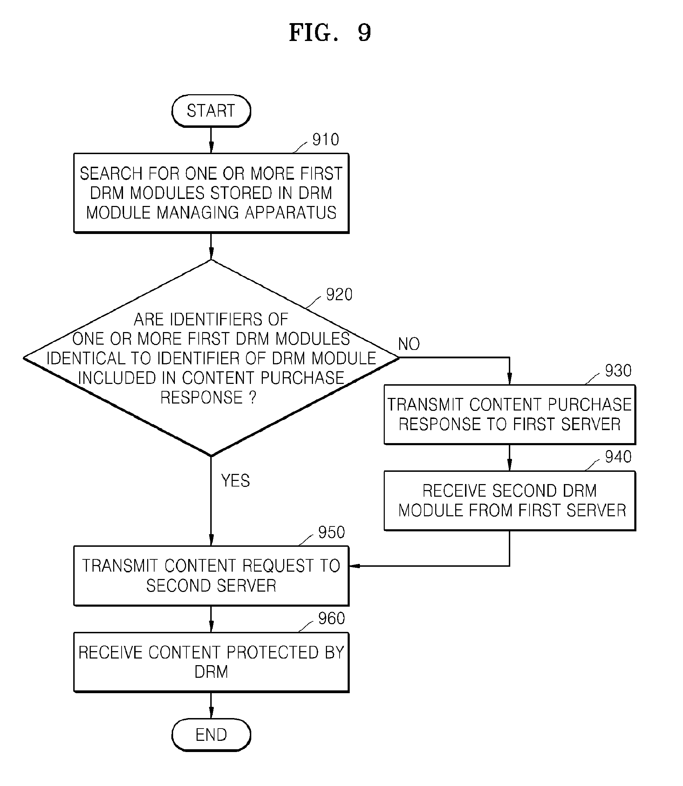

FIG. 9 is a flowchart illustrating a method of managing a DRM module, according to another exemplary embodiment of the present invention.

In operation 910, one or more first DRM modules stored in a DRM module managing apparatus are searched for.

In operation 920, it is determined whether an identifier of a DRM module included in a content purchase response is identical to at least one of identifiers of the one or more first DRM modules searched for in operation 910 based on the content purchase response.

Here, after the DRM module managing apparatus transmits to an SMS a content purchase request for purchasing content to be used by a user, the content purchase response indicating that the content is purchased according to the content purchase request may be received from the SMS. The content purchase request may include an identifier of the DRM module managing apparatus, an identifier of the content to be purchased by the user, and payment information for purchasing the content. The content purchase response may include the identifier of the content to be purchased by the user, and an identifier of a DRM module for removing a DRM scheme applied to the content.

If it is determined in operation 920 that the identifier of the DRM module included in the content purchase response is not identical to at least one of the identifiers of the one or more first DRM modules searched for in operation 910, the method proceeds to operation 930. In operation 930, the content purchase response is transmitted to a first server.

The content purchase response is transmitted to the first server in order to request the first server to transmit a DRM module corresponding to the identifier of the DRM module included in the content purchase response. The first server may be a DRM server.

If it is determined in operation 920 that the identifier of the DRM module included in the content purchase response is identical to at least one of the identifiers of the one or more first DRM modules searched for in operation 910, the one or more first DRM modules included in the DRM module managing apparatus are to be used, and therefore operations 930 and 940 may not be performed.

In operation 940, a second DRM module for removing a DRM scheme applied to the content purchased by the user is received from the first server.

The first server transmits, as the second DRM module, a DRM module corresponding to the identifier of the DRM module included in the content purchase response.

In operation 950, a content request requesting a second server to transmit the content purchased by the user is transmitted to the second server.

The second server may be a content server.

In operation 960, content corresponding to the content request is protected by a DRM scheme and is received.

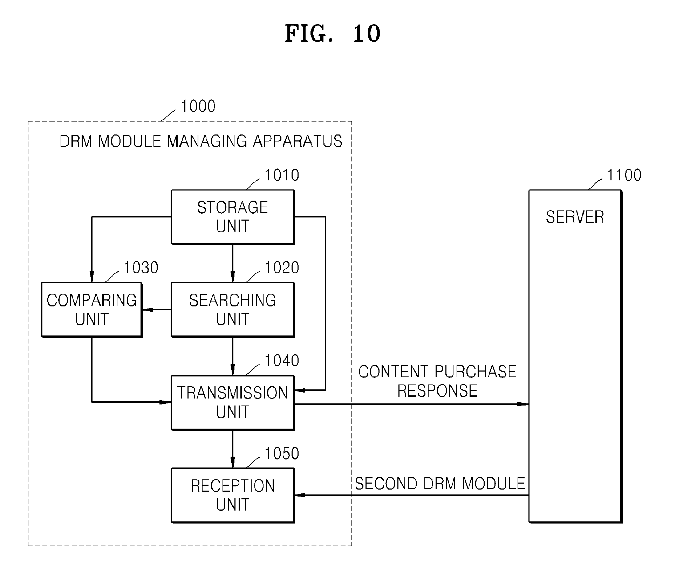

FIG. 10 is a block diagram of an apparatus for managing a DRM module (hereinafter referred to as a DRM module managing apparatus 1000), according to another exemplary embodiment of the present invention.

Referring to FIG. 10, the DRM module managing apparatus 1000 includes a storage unit 1010, a searching unit 1020, a comparing unit 1030, a transmission unit 1040, and a reception unit 1050. For convenience of explanation, a server 1100 is further illustrated.

The storage unit 1010 stores first DRM modules.

The searching unit 1020 searches for one or more first DRM modules stored in the storage unit 1010.

The comparing unit 1030 determines whether an identifier of a DRM module included in a content purchase response stored in the storage unit 1010 is identical to at least one of identifiers of the one or more first DRM modules searched for by the searching unit 1020.

The transmission unit 1040 selectively transmits to the server 1100 the content purchase response based on the comparison result of the comparing unit 103.

In detail, the transmission unit 1040 transmits to the server 1100 the content purchase response if the identifier of the DRM module included in the content purchase response stored in the storage unit 1010 is not identical to at least one of the identifiers of the one or more first DRM modules searched by the searching unit 1020, and does not transmit to the server the content purchase response if the identifier of the DRM module included in the content purchase response stored in the storage unit 1010 is identical to at least one of the identifiers of the one or more first DRM modules searched by the searching unit 1020.

The reception unit 1050 receives a second DRM module for removing a DRM scheme applied to a content purchased by a user from the server 1100.

If the second DRM module is received by the reception unit 1050, the transmission unit 1040 may transmit a content request to the server 1100, and the reception unit 1050 may receive the content protected by the DRM scheme corresponding to the content request.

The DRM module managing apparatus 1000 removes the DRM scheme applied to the content by using the second DRM module received by the reception unit 1050, and uses the content from which the DRM scheme is removed.

Alternatively, if the identifier of the DRM module included in the content purchase response is identical to the identifiers of the one or more first DRM modules searched for by the searching unit 1020, the reception unit 1050 may not receive the second DRM module. In this case, the DRM module managing apparatus 1000 may remove the DRM scheme by using the one or more first DRM modules stored in the storage unit 1010 and use the content.

The DRM module managing apparatus 1000 may further include a content using unit (not shown) removing the DRM scheme applied to the content and using the content from which the DRM scheme is removed.

The server 1100 of FIG. 10 may include all of the DRM server B, the content server C, and the SMS D of FIG. 6.

Exemplary embodiments of the present invention can be written as computer programs and can be implemented in general-use digital computers that execute the programs using a computer-readable recording medium.

Examples of the computer-readable recording medium include magnetic storage media (e.g., ROM, floppy disks, and hard disks), and optical recording media (e.g., CD-ROMs, and DVDs).

Alternatively, exemplary embodiments of the present invention can be written as computer programs and can be implemented in general-use digital computers that execute the programs using a computer-readable transmission medium, and examples of the computer-readable transmission include storage media such as carrier waves (e.g., transmission through the Internet).

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A method of managing a digital rights management (DRM) module by using an apparatus for managing the DRM module, the method comprising:
selecting a content from among available contents;
receiving the DRM module for removing a DRM scheme applied to the selected content, wherein the DRM module corresponds to a DRM scheme protecting the selected content;
using the selected content protected with the DRM scheme, by using the DRM module; and
at least partially removing the DRM module from the apparatus for managing the DRM module;
**characterised in that** the receiving of the DRM module further comprises receiving a DRM policy for managing the DRM module,
wherein the at least partial removal of the DRM module is performed based on the DRM policy,
wherein the DRM policy comprises information required to determine a portion to be removed from the DRM module if the DRM module is partially removed, and
wherein the at least partial removal of the DRM module is performed if the selected content is completely used, if a power supply to the apparatus for managing the DRM module is blocked, or if a period of time set by the DRM policy expires to thereby prevent analysis and hacking of the DRM module.

2. The method of claim 1, wherein the receiving of the DRM module comprises selectively receiving the DRM module based on at least one of whether the apparatus for managing the DRM module is rightful and whether the apparatus is authorized to use the selected content.

3. The method of claim 1,
wherein the DRM policy further comprises at least one of information regarding a removal period of the DRM module, information required to determine whether to encrypt the DRM module before the DRM module is stored in the apparatus for managing the DRM module, information regarding a method of encrypting the DRM module if the DRM module is to be encrypted, and information required to determine apparatuses to which an operation of the DRM module is allowed.

4. The method of claim 1, further comprising:
transmitting to a first server a content purchase request comprising an identifier of the apparatus for managing the DRM module, an identifier of the selected content, and payment information for purchasing the content;
receiving from the first server a content purchase response representing that the selected content is purchased according to the content purchase request; and
transmitting the content purchase response to a second server,
wherein the receiving of the DRM module comprises receiving the DRM module from the second server which selectively transmits the DRM module corresponding to the identifier of the selected content based on the content purchase response.

5. The method of claim 1, further comprising transmitting a content request to a third server which stores the available contents so as to request the third server to transmit the selected content, after receiving the DRM module,
wherein the selected content protected with the DRM scheme is received from the third server.

6. The method of claim 1, further comprising:
wherein if the selected content protected with the DRM scheme is a content encrypted by using a predetermined encryption key, then:
transmitting a decryption information request to a fourth server so as to request the fourth server to transmit decryption information comprising a decryption key for decrypting the encrypted content; and
receiving the decryption information from the fourth server,
wherein the encrypted content is decrypted by using the decryption key, before being used.

7. The method of claim 1, wherein the at least partial removal of the DRM module comprises removing a predetermined portion or a random portion of the DRM module based on the DRM policy.

8. The method of claim 2, wherein the apparatus for managing the DRM module is determined to be rightful based on at least one of whether an application comprised in the apparatus for managing the DRM module is tampered, whether the apparatus for managing the DRM module is revoked, and whether the apparatus for managing the DRM module is manufactured by a third party who is unrightful, and
wherein the application comprises an operating system and a virtual machine.

9. The method of claim 2, wherein the apparatus for managing the DRM module is determined to be authorized to use the selected content based on whether the apparatus for managing the DRM module comprises information representing that the selected content is purchased.

10. The method of claim 1, wherein the apparatus for managing the DRM module comprises a virtual machine, and
wherein the DRM module is executed in the virtual machine.

11. The method of claim 4, wherein the content purchase response is implemented as a token or a ticket.

12. An apparatus for managing a digital rights management (DRM) module, the apparatus comprising:
a reception unit which receives the DRM module for removing a DRM scheme applied to a content selected from among available contents, and receives the selected content protected with the DRM scheme;
a content using unit which uses the selected content protected with the DRM scheme, by using the DRM module; and
a module removal unit which at least partially removes the DRM module;
**characterised in that** the receiving of the DRM module further comprises receiving a DRM policy for managing the DRM module,
wherein the at least partial removal of the DRM module is performed based on the DRM policy,
wherein the DRM policy information required to determine a portion to be removed from the DRM module if the DRM module is partially removed, and
wherein the at least partial removal of the DRM module is performed if the selected content is completely used, if a power supply to the apparatus for managing the DRM module is blocked, or if a period of time set by the DRM policy expires to thereby prevent analysis and hacking of the DRM module.

13. A computer readable recording medium having recorded thereon a computer program for executing a method of managing a digital rights management (DRM) module, the method comprising:
selecting a content from among available contents;
receiving the DRM module for removing a DRM scheme applied to the selected content, wherein the DRM module corresponds to a DRM scheme protecting the selected content;
using the selected content protected with the DRM scheme, by using the DRM module; and
at least partially removing the DRM module;
**characterised in that** the receiving of the DRM module further comprises receiving a DRM policy for managing the DRM module,
wherein the at least partial removal of the DRM module is performed based on the DRM policy,
wherein the DRM policy comprises information required to determine a portion to be removed from the DRM module if the DRM module is partially removed, and
wherein the at least partial removal of the DRM module is performed if the selected content is completely used, if a power supply to the apparatus for managing the DRM module is blocked, or if a period of time set by the DRM policy expires to thereby prevent analysis and hacking of the DRM module.

## Patentansprüche

1. Verfahren zum Verwalten eines Moduls zur Verwaltung digitaler Rechte (Digital Rights Management - DRM) durch Verwendung einer Vorrichtung zum Verwalten des DRM-Moduls, wobei das Verfahren aufweist:
Auswählen eines Inhalts aus verfügbaren Inhalten;
Empfangen des DRM-Moduls zum Entfernen eines DRM-Schemas, das bei dem ausgewählten Inhalt angewendet wird, wobei das DRM-Modul einem DRM-Schema entspricht, das den ausgewählten Inhalt schützt;
Verwenden des ausgewählten Inhalts, der mit dem DRM-Schema geschützt ist, durch Verwenden des DRM-Moduls; und
zumindest teilweises Entfernen des DRM-Moduls von der Vorrichtung zum Verwalten des DRM-Moduls;
**dadurch gekennzeichnet, dass** das Empfangen des DRM-Moduls ferner ein Empfangen einer DRM-Strategie zum Verwalten des DRM-Moduls aufweist,
wobei das zumindest teilweise Entfernen des DRM-Moduls anhand der DRM-Strategie durchgeführt wird, wobei die DRM-Strategie Informationen aufweist, die zum Bestimmen eines Teils, der von dem DRM-Modul zu entfernen ist, erforderlich sind, wenn das DRM-Modul teilweise entfernt wird, und
wobei das zumindest teilweise Entfernen des DRM-Moduls durchgeführt wird, wenn der ausgewählte Inhalt vollständig verwendet ist, wenn eine Stromversorgung zur Vorrichtung zum Verwalten des DRM-Moduls blockiert ist oder wenn eine Zeitperiode, die durch die DRM-Strategie eingestellt ist, verstrichen ist, um dadurch eine Analyse und eine Manipulation (Hacking) des DRM-Moduls zu verhindern.

2. Verfahren nach Anspruch 1, wobei das Empfangen des DRM-Moduls ein selektives Empfangen des DRM-Moduls abhängig davon, ob die Vorrichtung zum Verwalten des DRM-Moduls rechtmäßig ist und/oder ob die Vorrichtung berechtigt ist, den gewählten Inhalt zu verwenden, aufweist.

3. Verfahren nach Anspruch 1,
wobei die DRM-Strategie des Weiteren zumindest eines von Informationen bezüglich einer Entfernungsperiode des DRM-Moduls, Informationen, die zum Bestimmen notwendig sind, ob das DRM-Modul zu verschlüsseln ist, bevor das DRM-Modul in der Vorrichtung zum Verwalten des DRM-Moduls gespeichert wird, Informationen bezüglich eines Verfahrens zum Verschlüsseln des DRM-Moduls, wenn das DRM-Modul zu verschlüsseln ist, und Informationen, die zum Bestimmen von Vorrichtungen notwendig sind, bei welchen ein Betrieb des DRM-Moduls zulässig ist, aufweist.

4. Verfahren nach Anspruch 1, des Weiteren aufweisend:
Senden einer Inhaltskaufanfrage an einen ersten Server, die eine Kennung der Vorrichtung zum Verwalten des DRM-Moduls, eine Kennung des gewählten Inhalts und Zahlungsinformationen zum Kauf des Inhalts aufweist;
Empfangen einer Inhaltskaufantwort vom ersten Server, die angibt, dass der ausgewählte Inhalt entsprechend der Inhaltskaufanfrage gekauft wird; und
Senden der Inhaltskaufantwort zu einem zweiten Server,
wobei das Empfangen des DRM-Moduls ein Empfangen des DRM-Moduls vom zweiten Server aufweist, der selektiv das DRM-Modul entsprechend der Kennung des ausgewählten Inhalts basierend auf der Inhaltskaufantwort sendet.

5. Verfahren nach Anspruch 1, des Weiteren aufweisend ein Senden einer Inhaltsanfrage an einen dritten Server, der die verfügbaren Inhalte speichert, um somit den dritten Server aufzufordern, den ausgewählten Inhalt nach Empfang des DRM-Moduls zu senden,
wobei der ausgewählte Inhalt, der mit dem DRM-Schema geschützt ist, vom dritten Server empfangen wird.

6. Verfahren nach Anspruch 1, des Weiteren aufweisend:
wobei, wenn der ausgewählte Inhalt, der mit dem DRM-Schema geschützt ist, ein Inhalt ist, der mit einem vorbestimmten Verschlüsselungsschlüssel verschlüsselt ist, dann:
Senden einer Entschlüsselungsinformationsanfrage an einen vierten Server, um somit den vierten Server aufzufordern, Entschlüsselungsinformationen zu senden, die einen Entschlüsselungsschlüssel zum Entschlüsseln des verschlüsselten Inhalts aufweisen; und
Empfangen der Entschlüsselungsinformationen vom vierten Server,
wobei der verschlüsselte Inhalt vor Verwendung mit dem Entschlüsselungsschlüssel entschlüsselt wird.

7. Verfahren nach Anspruch 1, wobei das zumindest teilweise Entfernen des DRM-Moduls ein Entfernen eines vorbestimmten Teils oder eines zufälligen Teils des DRM-Moduls basierend auf der DRM-Strategie aufweist.

8. Verfahren nach Anspruch 2, wobei die Vorrichtung zum Verwalten des DRM-Moduls abhängig davon, ob eine Applikation, die in der Vorrichtung zum Verwalten des DRM-Moduls enthalten ist, manipuliert ist, ob die Vorrichtung zum Verwalten des DRM-Moduls zurückgezogen ist und/oder ob die Vorrichtung zum Verwalten des DRM-Moduls von einer unrechtmäßigen dritten Partei hergestellt ist, als rechtmäßig bestimmt wird und
wobei die Applikation ein Betriebssystem und eine virtuelle Maschine aufweist.

9. Verfahren nach Anspruch 2, wobei die Vorrichtung zum Verwalten des DRM-Moduls als berechtigt, den ausgewählten Inhalt zu verwenden, abhängig davon bestimmt wird, ob die Vorrichtung zum Verwalten des DRM-Moduls Informationen aufweist, die angeben, dass der ausgewählte Inhalt gekauft ist.

10. Verfahren nach Anspruch 1, wobei die Vorrichtung zum Verwalten des DRM-Moduls eine virtuelle Maschine aufweist und
wobei das DRM-Modul in der virtuellen Maschine ausgeführt wird.

11. Verfahren nach Anspruch 4, wobei die Inhaltskaufantwort als Token oder als Ticket implementiert ist.

12. Vorrichtung zum Verwalten eines Moduls zur Verwaltung digitaler Rechte (DRM), wobei die Vorrichtung aufweist:
eine Empfangseinheit, die das DRM-Modul zum Entfernen eines DRM-Schemas empfängt, das bei einem ausgewählten Inhalt aus verfügbaren Inhalten angewendet wird, und den ausgewählten Inhalt, der mit dem DRM-Schema geschützt ist, empfängt;
eine Inhaltsverwendungseinheit, die den ausgewählten Inhalt, der mit dem DRM-Schema geschützt ist, durch Verwenden des DRM-Moduls verwendet; und
eine Modulentfernungseinheit, die zumindest teilweise das DRM-Modul entfernt;
**dadurch gekennzeichnet, dass** das Empfangen des DRM-Moduls ferner ein Empfangen einer DRM-Strategie zum Verwalten des DRM-Moduls aufweist,
wobei das zumindest teilweise Entfernen des DRM-Moduls anhand der DRM-Strategie durchgeführt wird,
wobei die DRM-Strategie Informationen, die zum Bestimmen eines Teils, der von dem DRM-Modul zu entfernen ist, erforderlich sind, wenn das DRM-Modul teilweise entfernt wird, und
wobei das zumindest teilweise Entfernen des DRM-Moduls durchgeführt wird, wenn der ausgewählte Inhalt vollständig verwendet ist, wenn eine Stromversorgung zur Vorrichtung zum Verwalten des DRM-Moduls blockiert ist oder wenn eine Zeitperiode, die durch die DRM-Strategie eingestellt ist, verstrichen ist, um dadurch eine Analyse und eine Manipulation (Hacking) des DRM-Moduls zu verhindern.

13. Computerlesbares Aufzeichnungsmedium, auf dem ein Computerprogramm zum Ausführen eines Verfahrens zum Verwalten eines Moduls zur Verwaltung digitaler Rechte (DRM) gespeichert ist, wobei das Verfahren aufweist:
Auswählen eines Inhalts aus verfügbaren Inhalten;
Empfangen des DRM-Moduls zum Entfernen eines DRM-Schemas, das bei dem ausgewählten Inhalt angewendet wird, wobei das DRM-Modul einem DRM-Schema entspricht, das den ausgewählten Inhalt schützt;
Verwenden des ausgewählten Inhalts, der mit dem DRM-Schema geschützt ist, durch Verwenden des DRM-Moduls; und
zumindest teilweises Entfernen des DRM-Moduls;
**dadurch gekennzeichnet, dass** das Empfangen des DRM-Moduls ferner ein Empfangen einer DRM-Strategie zum Verwalten des DRM-Moduls aufweist,
wobei das zumindest teilweise Entfernen des DRM-Moduls anhand der DRM-Strategie durchgeführt wird, wobei die DRM-Strategie Informationen aufweist,
die zum Bestimmen eines Teils, der von dem DRM-Modul zu entfernen ist, erforderlich sind, wenn das DRM-Modul teilweise entfernt wird, und
wobei das zumindest teilweise Entfernen des DRM-Moduls durchgeführt wird, wenn der ausgewählte Inhalt vollständig verwendet ist, wenn eine Stromversorgung zur Vorrichtung zum Verwalten des DRM-Moduls blockiert ist oder wenn eine Zeitperiode, die durch die DRM-Strategie eingestellt ist, verstrichen ist, um dadurch eine Analyse und eine Manipulation (Hacking) des DRM-Moduls zu verhindern.

## Revendications

1. Procédé pour gérer un module de gestion des droits numériques (DRM) en utilisant un appareil servant à gérer le module de DRM, le procédé comportant les étapes consistant à:
sélectionner un contenu parmi des contenus disponibles;
recevoir le module de DRM pour éliminer un schéma de DRM appliqué au contenu sélectionné, le module de DRM correspondant à un schéma de DRM protégeant le contenu sélectionné;
utiliser le contenu sélectionné protégé à l'aide du schéma de DRM, en utilisant le module de DRM; et
éliminer au moins partiellement le module de DRM de l'appareil servant à gérer le module de DRM;
**caractérisé en ce que** la réception du module de DRM comporte en outre l'étape consistant à recevoir une politique de DRM servant à gérer le module de DRM,
l'élimination au moins partielle du module de DRM étant effectuée sur la base de la politique de DRM,
la politique de DRM comportant des informations nécessaires pour déterminer une partie à éliminer du module de DRM si le module de DRM est partiellement éliminé, et
l'élimination au moins partielle du module de DRM étant effectuée si le contenu sélectionné est entièrement utilisé, si une alimentation électrique de l'appareil servant à gérer le module de DRM est bloquée ou si une période spécifiée par la politique de DRM expire pour empêcher ainsi l'analyse et le piratage du module de DRM.

2. Procédé selon la revendication 1, la réception du module de DRM comportant l'étape consistant à recevoir sélectivement le module de DRM sur la base d'au moins un critère parmi le fait que l'appareil servant à gérer le module de DRM soit légitime ou non et le fait que l'appareil soit autorisé ou non à utiliser le contenu sélectionné.

3. Procédé selon la revendication 1,
la politique de DRM comportant en outre au moins une information parmi une information concernant une période d'élimination du module de DRM, une information nécessaire pour déterminer s'il y a lieu de chiffrer le module de DRM avant que le module de DRM soit stocké dans l'appareil servant à gérer le module de DRM, une information concernant un procédé de chiffrement du module de DRM si le module de DRM est appelé à être chiffré, et une information nécessaire pour déterminer des appareils vers lesquels une exploitation du module de DRM est permise.

4. Procédé selon la revendication 1, comportant en outre les étapes consistant à:
envoyer à un premier serveur un demande d'achat de contenu comportant un identifiant de l'appareil servant à gérer le module de DRM, un identifiant du contenu sélectionné, et des informations de paiement servant à acheter le contenu;
recevoir en provenance du premier serveur une réponse d'achat de contenu représentant le fait que le contenu sélectionné est acheté d'après la demande d'achat de contenu; et
envoyer la réponse d'achat de contenu à un deuxième serveur,
la réception du module de DRM comportant l'étape consistant à recevoir le module de DRM en provenance du deuxième serveur qui envoie sélectivement le module de DRM correspondant à l'identifiant du contenu sélectionné sur la base de la réponse d'achat de contenu.

5. Procédé selon la revendication 1, comportant en outre l'étape consistant à envoyer une demande de contenu à un troisième serveur qui stocke les contenus disponibles de façon à demander au troisième serveur d'émettre le contenu sélectionné, après avoir reçu le module de DRM,
le contenu sélectionné protégé à l'aide du schéma de DRM étant reçu en provenance du troisième serveur.

6. Procédé selon la revendication 1, comportant en outre les étapes consistant:
si le contenu sélectionné protégé à l'aide du schéma de DRM étant un contenu chiffré en utilisant une clé de chiffrement prédéterminée, alors:
à envoyer une demande d'information de déchiffrement à un quatrième serveur de façon à demander au quatrième serveur d'envoyer une information de déchiffrement comportant une clé de déchiffrement servant à déchiffrer le contenu chiffré; et
à recevoir l'information de déchiffrement en provenance du quatrième serveur,
le contenu chiffré étant déchiffré en utilisant la clé de déchiffrement, avant d'être utilisé.

7. Procédé selon la revendication 1, l'élimination au moins partielle du module de DRM comportant l'étape consistant à éliminer une partie prédéterminée ou une partie aléatoire du module de DRM sur la base de la politique de DRM.

8. Procédé selon la revendication 2, l'appareil servant à gérer le module de DRM étant déterminé comme étant légitime sur la base d'au moins un critère parmi le fait qu'une application comprise dans l'appareil servant à gérer le module de DRM soit altéré ou non, le fait que l'appareil servant à gérer le module de DRM soit révoqué ou non, et le fait que l'appareil servant à gérer le module de DRM soit ou non fabriqué par un tiers qui est illégitime, et
l'application comportant un système d'exploitation et une machine virtuelle.

9. Procédé selon la revendication 2, l'appareil servant à gérer le module de DRM étant déterminé comme étant autorisé à utiliser le contenu sélectionné sur la base du fait que l'appareil servant à gérer le module de DRM comporte ou non une information représentant le fait que le contenu sélectionné est acheté.

10. Procédé selon la revendication 1, l'appareil servant à gérer le module de DRM comportant une machine virtuelle, et
le module de DRM étant exécuté sur la machine virtuelle.

11. Procédé selon la revendication 4, la réponse d'achat de contenu étant mise en oeµvre sous la forme d'un jeton ou d'un ticket.

12. Appareil servant à gérer un module de gestion des droits numériques (DRM), l'appareil comportant:
une unité de réception qui reçoit le module de DRM pour éliminer un schéma de DRM appliqué à un contenu sélectionné parmi des contenus disponibles, et reçoit le contenu sélectionné protégé à l'aide du schéma de DRM;
une unité d'utilisation de contenu qui utilise le contenu sélectionné protégé à l'aide du schéma de DRM, en utilisant le module de DRM; et
une unité d'élimination de module qui élimine au moins partiellement le module de DRM;
**caractérisé en ce que** la réception du module de DRM comporte en outre l'étape consistant à recevoir une politique de DRM servant à gérer le module de DRM,
l'élimination au moins partielle du module de DRM étant effectuée sur la base de la politique de DRM,
les informations de politique de DRM nécessaires pour déterminer une partie à éliminer du module de DRM si le module de DRM est partiellement éliminé, et
l'élimination au moins partielle du module de DRM étant effectuée si le contenu sélectionné est entièrement utilisé, si une alimentation électrique de l'appareil servant à gérer le module de DRM est bloquée ou si une période spécifiée par la politique de DRM expire pour empêcher ainsi l'analyse et le piratage du module de DRM.

13. Support d'enregistrement lisible par ordinateur sur lequel est enregistré un programme d'ordinateur servant à exécuter un procédé pour gérer un module de gestion des droits numériques (DRM), le procédé comportant les étapes consistant à:
sélectionner un contenu parmi des contenus disponibles;
recevoir le module de DRM pour éliminer un schéma de DRM appliqué au contenu sélectionné, le module de DRM correspondant à un schéma de DRM protégeant le contenu sélectionné;
utiliser le contenu sélectionné protégé à l'aide du schéma de DRM, en utilisant le module de DRM; et
éliminer au moins partiellement le module de DRM;
**caractérisé en ce que** la réception du module de DRM comporte en outre l'étape consistant à recevoir une politique de DRM servant à gérer le module de DRM,
l'élimination au moins partielle du module de DRM étant effectuée sur la base de la politique de DRM,
la politique de DRM comportant des informations nécessaires pour déterminer une partie à éliminer du module de DRM si le module de DRM est partiellement éliminé, et
l'élimination au moins partielle du module de DRM étant effectuée si le contenu sélectionné est entièrement utilisé, si une alimentation électrique de l'appareil servant à gérer le module de DRM est bloquée ou si une période spécifiée par la politique de DRM expire pour empêcher ainsi l'analyse et le piratage du module de DRM.
